# EUROPEAN PATENT APPLICATION

(11) **EP 4 801 025 A1**
(43) Date of publication of application: **02.09.2026**
(21) Application number: 26157036.0
(22) Date of filing: 06.02.2026
(51) Int. Cl.: H04N 7/18

(54) **METHOD AND DEVICE FOR PROVIDING VIDEO INFORMATION**

(30) Priority: 28.02.2025 KR 20250026508
(71) Applicant: Volvo Construction Equipment AB, 631 85 Eskilstuna (SE)
(72) Inventor: KIM, Yong Jae, 51710 Gyeongsangnam-do (KR); KIM, Ji Yun, 51710 Gyeongsangnam-do (KR); LEE, Chan Ho, 51710 Gyeongsangnam-do (KR)
(74) Representative: Kransell & Wennborg KB

(57) **Abstract**

According to one embodiment, there is disclosed a method comprising a receiving unit obtaining a plurality of video information corresponding to a plurality of directions and provided from a plurality of video devices; the receiving unit obtaining a user input for controlling a vehicle; a processor determining a direction priority for at least one of the plurality of directions based on the user input; the processor determining a video priority for at least one of the plurality of video information based on the direction priority; the processor determining a quality level for the plurality of video information based on the video priority; and the processor providing all or part of the plurality of video information according to the quality level, and a device and a recording medium for implementing the method.

## Description

### [TECHNICAL FIELD]

The technical field of the present disclosure relates to a method and device for providing video information, and is related to a technical field for obtaining and providing video information according to the movement of a vehicle.

### [TECHNOLOGY BEHIND THE INVENTION]

Display devices include both a device for recording or playing video and a device for recording or playing audio. Such display devices include, for example, televisions, monitors, projectors, and tablets. As display devices diversify in their functions, they are being implemented as multimedia devices with complex features such as taking pictures or videos, playing games, and receiving broadcasts, in addition to broadcast output and video playback functions. Meanwhile, these display devices are installed inside the vehicle and provide various data for the driver's convenience. Traditionally, a method has often been used to enable vehicles to operate based on remote vehicle operation. When remotely operating a vehicle, video data is transmitted via a camera mounted on the vehicle over a wireless network, so that video data is provided not only to the display device inside the vehicle but also to the display device at the remote station. When transmitting video data to the display device at the remote station, there is a limitation that the data transmission bandwidth is limited depending on the performance of the wireless network, resulting in degraded quality or interrupted transmission of all video data. In addition, conventional display devices installed inside vehicles have limitations in that they only output predefined data types, such as content limited to the vehicle's status or functions, and provide multiple data through the same resolution, and do not output differentiated data in response to various events that may occur during vehicle operation. Therefore, there is a need for a method of transmitting optimized video data according to vehicle operation and control to the display of the remote station, and a method of enabling differentiated video data to be output according to various events.

### Prior Art

### Patent Document

Korean Patent Publication No. 10-2015-0037462 (April 8, 2015), Vehicle Surrounding Monitoring Device Using Stored Video

### [SUMMARY OF THE INVENTION]

### Problems to be solved

The present disclosure is intended to address the above-described problems and discloses a method and device for providing video information, and a method for providing video information in response to various situations occurring in a vehicle as well as a method for controlling the same.

The problems to be solved in the present disclosure are not limited to the problems mentioned above, and other problems not mentioned will be clearly understood by those skilled in the art from the description below.

### Means of solving the problems

As a technical means for achieving the above-described technical problems, a method for providing video information according to a first aspect of the present disclosure may include: a receiving unit obtaining a plurality of video information corresponding to a plurality of directions and provided from a plurality of video devices; the receiving unit obtaining a user input for controlling a vehicle; a processor determining a direction priority for at least one of the plurality of directions based on the user input; the processor determining a video priority for at least one of the plurality of video information based on the direction priority; the processor determining a quality level for the plurality of video information based on the video priority; and the processor providing all or part of the plurality of video information according to the quality level.

Optionally, in some examples, the determining the direction priority may include: the processor determining one or more directions among the plurality of directions that need to be monitored for safety as a top priority direction; the processor determining one or more directions among the plurality of directions that need to be monitored for movement and/or work as a secondary priority direction; and the processor determining the direction priority based on the top priority direction and the secondary priority direction.

Optionally, in some examples, the user input may include at least one of a movement direction control input for controlling a movement direction of the vehicle, a work direction control input for controlling a work direction of the vehicle, a movement direction intention input for indicating a user's intention to control the movement direction, and a work direction intention input for indicating a user's intention to control the work direction.

Optionally, in some examples, the determining the direction priority may involve the processor determining the direction priority of the movement direction control input to be higher than the direction priority of the movement direction intention input.

Optionally, in some examples, the determining the direction priority may involve the processor determining the direction priority of the work direction control input to be higher than the direction priority of the work direction intention input.

Optionally, in some examples, the movement direction intention input may include an operational input for at least one of an ignition switch, a turn signal, and a gear, and the movement direction control input may include an operational input for at least one of a drive lever, a steering lever, a steering wheel, and a pedal, and the location of the vehicle may be changed to another location based on the operation timing at which the movement direction control input is obtained.

Optionally, in some examples, the work direction intention input may include an operational input for at least one of a steering lever, a turn signal, and a gear, and the work direction control input may include an operational input for at least one of a driving lever, the steering lever, a steering wheel, and a pedal, and the upper or lower part of the vehicle may be rotated based on the operation timing at which the work direction control input is obtained.

Optionally, in some examples, the determining the quality level may include: the processor determining whether there is overlap between at least one object included in the mutual video based on video information included in the mutual video corresponding to adjacent directions based on the video priority; and the processor determining the quality level based on the overlap determination.

Optionally, in some examples, the determining the quality level based on the overlap determination may involve the processor determining a higher quality level for video with the higher video priority among the mutual videos when there is an overlapping region between the at least one object included in the mutual videos.

Optionally, in some examples, one or more directions that need to be monitored for safety may be determined based on obstacle detection signals obtained from at least one obstacle detection device.

A device for providing video information according to a second aspect of the present disclosure may include: a receiving unit obtaining a plurality of video information corresponding to a plurality of directions and provided from a plurality of video devices, and obtaining a user input for controlling a vehicle; and a processor determining a direction priority for at least one of the plurality of directions based on the user input, determining a video priority for at least one of the plurality of video information based on the direction priority, determining a quality level for the plurality of video information based on the video priority, and providing all or part of the plurality of video information according to the quality level.

Optionally, in some examples, the processor may determine one or more directions among the plurality of directions that need to be monitored for safety as a top priority direction, may determine one or more directions among the plurality of directions that need to be monitored for movement and/or work as a secondary priority direction, and may determine the direction priority based on the top priority direction and the secondary priority direction.

Optionally, in some examples, the user input may include at least one of a movement direction control input for controlling a movement direction of the vehicle, a work direction control input for controlling a work direction of the vehicle, a movement direction intention input for indicating a user's intention to control the movement direction, and a work direction intention input for indicating a user's intention to control the work direction.

Optionally, in some examples, the processor may determine the direction priority of the movement direction control input to be higher than the direction priority of the movement direction intention input.

A third aspect of the present disclosure may provide a computer-readable recording medium on which a program for executing the method of the first aspect on a computer is recorded. At least one of the disclosed aspects, examples and claims may be suitably combined with one another as would be apparent to those skilled in the art. Additional features and advantages are set forth in the following description, claims, and drawings, and in part will be readily apparent to those skilled in the art from the foregoing or may be appreciated by practicing the disclosure as described herein. Also disclosed are computer systems, control units, code modules, computer-implemented methods, computer-readable medium and computer program products associated with the aforementioned technical advantages.

### EFFECT OF THE INVENTION

According to one embodiment of the present disclosure, the efficiency of video provision may be improved in that multiple video information may be provided with different qualities depending on the surrounding circumstances of the vehicle and the driving state of the vehicle.

Additionally, it can improve user satisfaction by allowing users to identify important video information more clearly, and it can help reduce the risk of accidents.

Additionally, the accuracy of video information provision may be improved because different video priorities may be applied according to various situations.

The effects of the present disclosure are not limited to the effects mentioned above, and other effects not mentioned will be clearly understood by those skilled in the art from the description below.

### [BRIEF DESCRIPTION OF THE DRAWINGS]

FIG. 1 is a schematic diagram showing an example of a configuration of a device according to one embodiment.
FIG. 2 is a flow chart illustrating a method in which a device according to one embodiment operates.
FIG. 3 is a diagram illustrating an example of a device obtaining multiple pieces of video information according to one embodiment.
FIG. 4 is a schematic diagram illustrating a configuration of a steering device of an excavator and/or a vehicle controlled according to one embodiment.
FIG. 5 is a diagram schematically illustrating an example of a vehicle moving based on a movement direction control input according to one embodiment.
FIG. 6 is a diagram schematically illustrating an example of an upper part of a vehicle moving based on a work direction control input according to one embodiment.
FIGs. 7A and 7B are diagrams schematically illustrating an example of a lower part of a vehicle moving based on a work direction control input according to one embodiment.
FIG. 8 is a diagram schematically illustrating an example of a device determining video priority of one or more directions that need to be monitored for safety according to one embodiment.
FIG. 9 is a schematic diagram illustrating an example of a device determining one or more video priorities that need to be monitored for movement and/or work according to one embodiment.
FIG. 10a is a schematic diagram illustrating an example in which a device provides video information with different quality levels applied based on the forward direction of a vehicle according to one embodiment.
FIG. 10b is a schematic diagram illustrating an example in which a device provides video information with different quality levels applied based on the reverse direction of a vehicle according to one embodiment.
FIGs. 11a and 11b are schematic diagrams illustrating an example in which a device provides video information with quality levels applied based on top priority direction and secondary priority direction according to one embodiment.
FIG. 12 is a schematic diagram illustrating a flow chart for providing video information according to one embodiment.
FIG. 13 is a diagram illustrating a more detailed flow chart for providing video information according to one embodiment.
FIG. 14 is a diagram schematically illustrating an example in which, in one embodiment, the quality level for each of a plurality of video devices is determined differently according to a plurality of situations, through a setup table.

### [DETAILED DESCRIPTION OF THE INVENTION]

The advantages and features and the methods for achieving them in the present disclosure will become apparent with reference to the embodiments described below in detail together with the accompanying drawings. However, the present disclosure is not limited to the embodiments disclosed below and may be implemented in various different forms, and the present embodiments are provided only to make the disclosure complete and fully inform those skilled in the art of the scope of the present disclosure.

The terms used herein are for the purpose of describing embodiments only and are not intended to limit the present disclosure. In this specification, singular forms also include plural forms unless specifically stated otherwise in the text. The terms "comprises" and/or "comprising" used in the specification do not exclude the presence or addition of one or more other components other than the components stated. Like reference numerals throughout the specification refer to like components, and "and/or" includes each and every combination of one or more of the mentioned components. Although "first", "second", and the like are used to describe various components, these components are, of course, not limited by these terms. These terms are only used to distinguish one component from another. Accordingly, it goes without saying that the first component mentioned below may also be the second component within the technical concept of the present disclosure.

Unless otherwise defined, all terms (including technical and scientific terms) used in the present specification may be used in a meaning commonly understood by those skilled in the art. Additionally, terms defined in commonly used dictionaries are not to be interpreted ideally or excessively unless explicitly and specifically defined otherwise.

Spatially relative terms such as "below," "beneath," "lower," "above," and "upper" may be used to easily describe the relationship of one component to other components as illustrated in the drawings. Spatially relative terms should be understood to include different orientations of components when in use or operation in addition to the orientations depicted in the drawings. For example, when components depicted in a drawing are flipped, a component described as "below" or "beneath" another component may end up being placed "above" the another component. Thus, the exemplary term "below" may include both downward and upward directions. Components may also be oriented in different directions, and thus spatially relative terms may be interpreted according to their orientation.

Hereinafter, various embodiments will be described in detail with reference to the drawings.

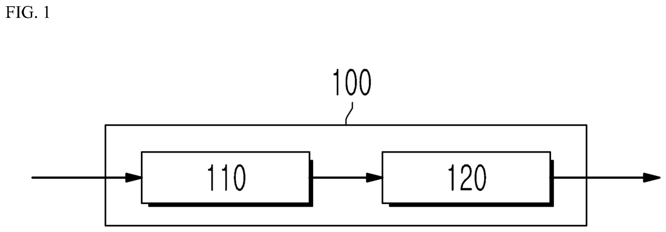

FIG. 1 is a schematic diagram showing an example of a configuration of a device 100 according to an embodiment.

Referring to FIG. 1, the device 100 may include a receiving unit 110 and a processor 120. However, not all of the components illustrated in FIG. 1 are essential components of the device 100. The device 100 may be implemented with more components than those illustrated in FIG. 1, or the device 100 may be implemented with fewer components than those illustrated in FIG. 1.

For example, the device 100 according to an embodiment may further include a memory (not shown). As another example, a device 100 according to one embodiment includes a transmitter (not shown) and a display (not shown), and a processor 120 may control the transmitter (not shown) or the display (not shown).

The device 100 according to an embodiment represents a computing device providing video information, and in an embodiment, may be implemented as a desktop PC, a tablet, a laptop, or the like, or may be implemented as a computing device such as a smartphone. The device 100 according to an embodiment may be included inside a vehicle or an excavator or the like, or may be located outside the vehicle or the excavator by being capable of mobile communication with a server or the like.

According to one embodiment, a receiving unit 110 corresponds to multiple directions and obtains multiple video information provided from multiple video devices. In one embodiment, an example in which multiple video information corresponding to multiple directions is provided is described as being provided through multiple video devices, but multiple video information may also be provided through multiple frames on one device. For example, multiple video information corresponding to multiple directions may be provided through a split screen on one window.

A receiving unit 110 according to one embodiment obtains user input for controlling a vehicle.

A processor 120 according to one embodiment determines a direction priority for at least one of a plurality of directions based on user input.

A processor 120 according to one embodiment determines video priority for at least one of a plurality of video information based on a direction priority.

A processor 120 according to one embodiment determines a quality level for a plurality of video information based on video priority.

A processor 120 according to one embodiment provides all or part of a plurality of video information according to a quality level.

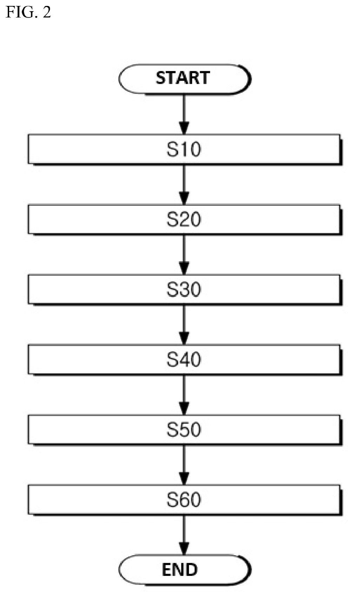

For a more specific operation method of the device 100, the contents of FIG. 2 and below may be referred.

FIG. 2 is a flow chart illustrating a method in which a device 100 according to an embodiment operates.

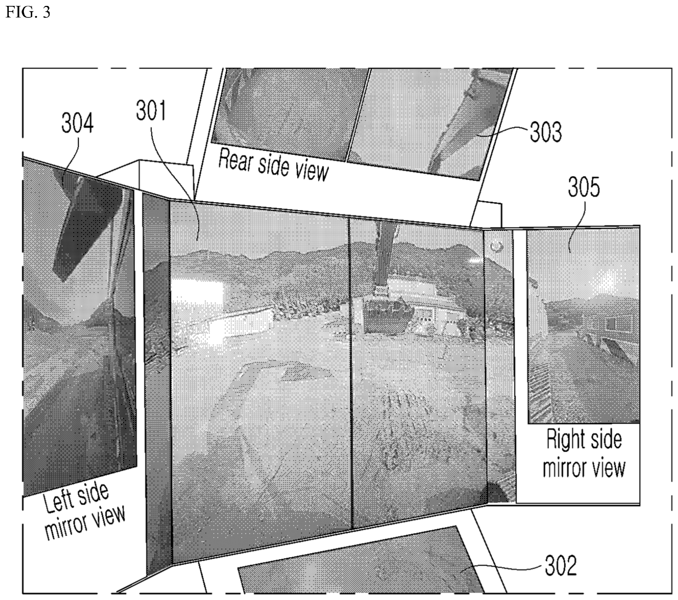

Referring to step S10, a device 100 according to one embodiment corresponds to multiple directions and obtains multiple video information provided from multiple video devices. In this regard, an explanation will be given with reference to FIG. 3.

FIG. 3 is a diagram illustrating an example of a device 100 obtaining multiple pieces of video information according to one embodiment.

Referring to FIG. 3, a device 100 according to one embodiment can obtain a plurality of video information including images captured from a plurality of directions from a plurality of video devices included in a vehicle. The device 100 can obtain multiple signals corresponding to multiple operations that may be performed inside the vehicle or multiple signals corresponding to multiple objects that may be detected from outside the vehicle. In one embodiment, the vehicle may comprise an excavator. The plurality of video devices may be at least one video device positioned in a plurality of directions outside the vehicle to record the surrounding area of the vehicle. The device 100 can obtain a plurality of video information corresponding to the surrounding area of the vehicle that is recorded from different directions from a plurality of video devices. The video views obtained by the device 100 from multiple video devices may include a front side view 301, a bottom view 302, a rear side view 303, a left side view 304, and a right side view 305. If the vehicle corresponds to an excavator, the front side view 301 may include the boom, arm, and bucket of the excavator, and the bottom view 302 may include the ground facing the boom, arm, and bucket of the excavator.

Referring to step S20, the device 100 according to one embodiment obtains user input for controlling the vehicle.

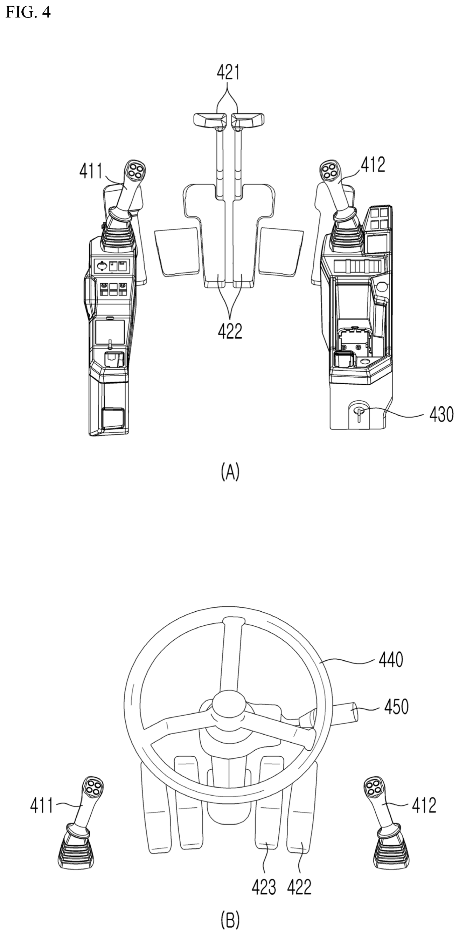

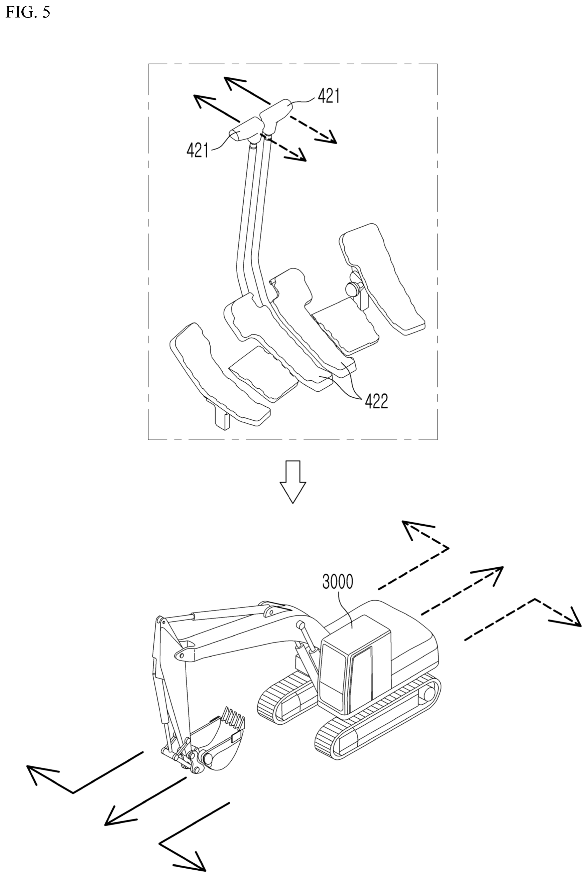

In one embodiment, a user input may include at least one of a movement direction control input for controlling a movement direction of a vehicle, a work direction control input for controlling a work direction of a vehicle, a movement direction intention input for indicating a user's intention to control the movement direction, and a work direction intention input for indicating a user's intention to control the work direction. In one embodiment, the movement direction control input may correspond to a control input that causes the location of the vehicle to change. Additionally, the work direction control input may correspond to a control input that causes the direction in which the upper or lower part of the vehicle faces to change so that the vehicle can work at the same location. Additionally, the movement direction intention input may correspond to an operational input that allows the movement direction control input to be predicted before operating the movement direction control input, and the work direction intention input may correspond to an operational input that allows the work direction control input to be predicted before operating the work direction control input. Specifically, the movement direction intention input may include an operational input for at least one of an ignition switch, a turn signal, and a gear, Additionally, the movement direction control input may include an operational input for at least one of a driving lever, a steering lever, a steering wheel, and a pedal. The driving lever may include a forward lever and a reverse lever. In one embodiment, the vehicle may include an excavator and the driving lever may include a forward lever and a reverse lever included in the excavator, such that operation of the driving lever may be obtained as a movement direction control input. Additionally, for vehicles other than excavators, steering wheel operation may be obtained as a movement direction control input. The steering lever may include a joystick on the excavator. In the case of an excavator, the steering lever operation may be obtained as a movement direction control input. The pedals may include an accelerator pedal and a brake pedal. Accelerator pedal or brake pedal operation may also be obtained as a movement direction control input. The location of the vehicle may be changed to a different location based on the timing of the operation at which the movement direction control input is obtained. For example, an ignition switch may be obtained as one of the movement direction intention inputs in that it may be a device that may be operated prior to movement to move a vehicle or excavator. Further, a turn signal may be obtained as one of the movement direction intention inputs in that it may be a device that may be operated prior to movement to change the direction of a vehicle or excavator. Additionally, a gear may be obtained as one of the movement direction intention inputs in that it may be a device that may be operated prior to movement to reverse a vehicle or excavator. The driving lever, steering lever, steering wheel and pedals may be devices that directly control the movement direction when moving. When a user operates a driving lever, a steering lever, or a pedal on an excavator, the location of the excavator may be changed to a different location based on the timing of the operation. Specifically, when the user operates the forward lever and pedals, the excavator can move in a forward direction according to the forward command, and when the user operates the reverse lever and pedal, the excavator can move in a backward direction according to the reverse command. Additionally, when the user operates the steering lever together with the driving lever and pedals, the excavator can move to a location where it has moved forward or backward and then turned right or left according to a command to move forward and then turn right or move forward and then turn left, a command to move backward and then turn right or move backward and then turn left. For vehicles other than excavators, the vehicle can move forward or backward depending on the forward or backward command when the user operates the pedals based on whether the gear is engaged or not. Additionally, when the user operates the steering wheel together with the pedals, the vehicle can move to a location where it has moved forward or backward and then turned right or left according to a command to move forward and then turn right or move forward and then turn left, a command to move backward and then turn right or move backward and then turn left. That is, in one embodiment, the movement direction control input may correspond to an operational input that causes the location of the vehicle to change to another location. In this regard, an explanation will be given with reference to FIGs. 4 and 5.

FIG. 4 is a schematic diagram illustrating a configuration of a steering device of an excavator and/or a vehicle controlled according to one embodiment.

Referring to FIG. 4, in one embodiment, the device 100 may control the operation of a crawler type (track type) or wheel type (tire type) excavator and/or vehicle. In FIG. 4, (A) may be an example of a crawler type, and (B) may be an example of a wheel-type. In one embodiment, the configuration of the vehicle's steering device may include a left steering lever 411, a right steering lever 412, and in the crawler type of (A), movement may be controlled through a driving lever 421 and a driving pedal 422. Additionally, in the wheel type of (B), movement may be controlled through the steering wheel 440 and the driving pedal 422. Additionally, in the wheel type, a separate accelerator pedal and brake pedal 423 may be further included. The excavator and/or vehicle may include an ignition switch 430, although a separate ignition switch 430 is not further illustrated in (B), the ignition switch 430 may also be included in any region in (B). Additionally, the excavator and/or vehicle may further include a multi-function lever 450. For example, a multi-function lever 450 may be an example of a steering device capable of operational input for at least one of an ignition switch, a turn signal, and a gear. In one embodiment, the multi-function lever 450 is shown as an example of a lever capable of operational input for at least one of an ignition switch, a turn signal, and a gear, but is not limited thereto, and separate steering lever corresponding to each of the ignition switch, the turn signal, and the gear may be included.

FIG. 5 is a diagram schematically illustrating an example of a vehicle 3000 moving based on a movement direction control input according to one embodiment.

In FIG. 5, an example of a vehicle 3000 is shown as an excavator, but is not limited thereto. Referring to FIG. 4, when an operational input signal for a driving lever 421 and/or a driving pedal 422 is obtained, the lower area (wheel area) of the vehicle 3000 may move forward, backward, turn left after moving forward, turn right after moving forward, turn left after moving backward, or turn left after moving backward, thereby moving the location of the vehicle 3000. In FIG. 5, the lever and pedal for steering the left or right wheel rail are expressed separately by taking the case of an excavator as an example, but the present invention is not limited thereto. As another example, in vehicles other than excavators 3000 or wheeled excavators, it may be applied in the form of additional options such as an accelerator pedal and a brake pedal 423.

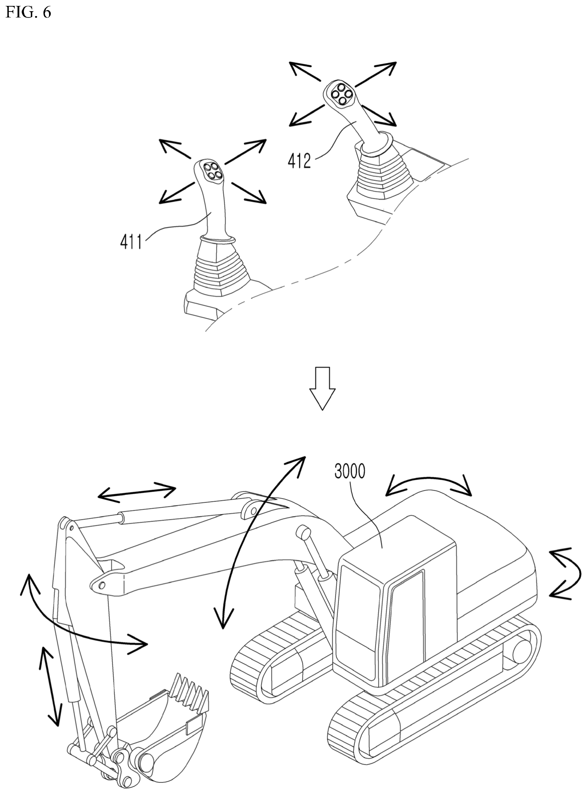

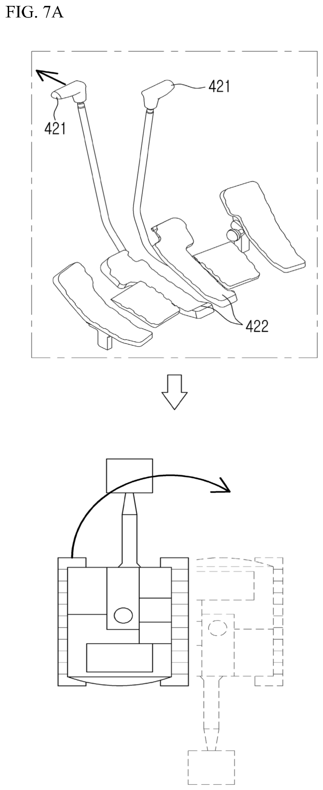

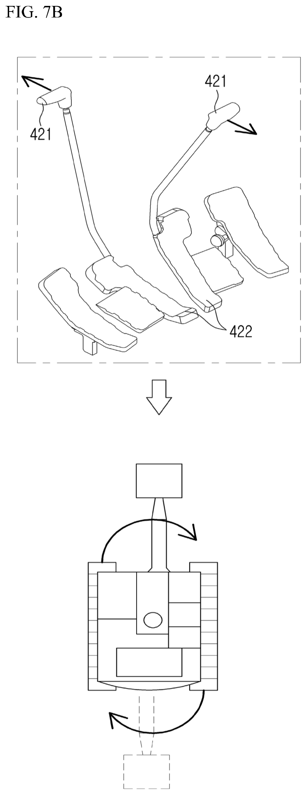

In one embodiment, the work direction intention input may include an operational input for at least one of a steering lever, a turn signal, and a gear, The work direction intention input may be an input that can predict the work direction of the vehicle. For example, the operational input of a steering lever included in the work direction intention input corresponding to an excavator may have a predefined control method corresponding to the movement direction of the steering lever. The work direction may be changed if the movement of at least one device among the boom, arm, and bucket is controlled by the movement direction of the steering lever (forward, backward, diagonal, or the like). Additionally, when the turn signal is turned on, it may be predicted that work will be performed in the direction corresponding to the turned on turn signal, and it may be predicted that work will be performed by moving forward or backward depending on the gear operational input. The work direction control input may include an operational input for at least one of a driving lever, a steering lever, a steering wheel, and a pedal. The work direction control input may represent an input that directly determines the work direction. The work direction control input may include an operational input that directly changes the work direction, such as moving forward or backward via a driving lever, moving at least one device among a boom, an arm, and a bucket via a steering lever, or rotating via a steering wheel. For example, the input of the steering lever itself may be included in the work direction intention input in that it is an input that can predict that the work direction will change in any direction, and the explicit movement direction of the steering lever to determine a specific work direction may be included in the work direction control input. In an excavator, rotation control input may be obtained according to a predefined control method corresponding to the movement direction of the steering lever. The upper or lower part of the vehicle 3000 may be rotated based on the operation timing at which the work direction control input is obtained. An example of a vehicle 3000 having its upper or lower part rotated may be an example applied to an excavator. In this regard, explanation will be given with reference to FIGs. 6, 7A, and 7B.

FIG. 6 is a diagram schematically illustrating an example of an upper part of a vehicle 3000 moving based on a work direction control input according to one embodiment.

FIGs. 7A and 7B are diagrams schematically illustrating an example of a lower part of a vehicle moving based on a work direction control input according to one embodiment. In FIGs. 6, 7A, and 7B, and example of a vehicle 3000 is shown as an excavator, but it is not limited thereto. In FIGs. 6, 7A, and 7B, an excavator is used as an example and is uniformly described as a vehicle 3000. The device 100 may determine that an operational input signal for at least one steering lever 411, 412 included in the vehicle 3000 obtained while the vehicle 3000 is stopped as a signal corresponding to a work direction control input. Referring to FIG. 6, the movement of at least one device among the boom, arm, and bucket included in the vehicle 3000 may be controlled according to a predefined work device control method corresponding to the movement direction of the steering lever 411, 412. Therefore, the work direction may be changed as the position of at least one of the boom, arm and bucket is moved. Additionally, the upper part of the vehicle 3000 may be rotated left and right according to a predefined rotation control method corresponding to the movement direction of the steering lever 411, 412. Referring to FIGs. 7A and 7B, the device 100 may determine that an operational input signal for a driving lever 421 and/or pedal included in a vehicle 3000 obtained as a signal corresponding to a work direction control input. In one embodiment, the pedal may include a driving pedal 422. According to a predefined rotation control method corresponding to the operational input of the driving lever 421 and/or the driving pedal 422, the lower part of the vehicle 3000 may be rotated in a direction corresponding to the operational input. For example, as shown in FIG. 7A, when an operational input for one driving lever 421 or one pedal is obtained, an example of pivot rotation in which only one track (wheel rail) is driven to change direction may be performed. In addition, as shown in FIG. 7B, when an input is obtained in which the driving levers 421 on both sides are steered to face in different directions, one driving lever is steered to face forward and one driving lever is steered to face backward, an example of a spin rotation in which the left and right tracks (wheel rails) are driven in opposite directions to change direction in place may be performed. Accordingly, the lower part of the vehicle 3000 may be rotated according to a predefined rotation control method corresponding to the operational input.

Referring to the step S30, a device 100 according to one embodiment determines a direction priority for at least one of a plurality of directions based on user input. In one embodiment, the direction priority may represent a priority based on the importance corresponding to the direction that the user should check while driving. For example, among multiple directions, a direction corresponding to a movement direction and/or a work direction determined based on user input may be given a higher priority. The device 100 may determine the direction priority of the movement direction control input to be higher than the direction priority of the movement direction intention input. For example, since the movement direction intention input may be an input that can predict that the vehicle will move, and the movement direction control input may be a direct input for the movement of the vehicle, the priority of the direction corresponding to the movement direction control input may be determined to be higher than the priority of the direction corresponding to the movement direction intention input. For example, movement direction intention input may include turn signals and the driver's viewpoint. For example, when a turn signal is turned on, it may be predicted that the vehicle will move in the direction corresponding to the turned on turn signal. Additionally, the driver's viewpoint may be obtained through an eye tracking device. It may be predicted that the vehicle will move in the direction that the obtained driver's viewpoint is pointing. Further, the device 100 may determine the direction priority of the work direction control input to be higher than the direction priority of the work direction intention input. For example, since the work direction intention input may be an input that can predict that the work direction of the vehicle will change, and the work direction control input may be a direct input for the change in the work direction of the vehicle, the priority of the direction corresponding to the work direction control input may be determined to be higher than the priority of the direction corresponding to the work direction intention input. Additionally, the device 100 may determine one or more directions that need to be monitored for safety among multiple directions as the top priority direction. Additionally, the device 100 may determine one or more directions that need to be monitored for movement and/or work among multiple directions as the secondary priority direction. The device 100 may determine the direction priority based on the top priority direction and the secondary priority direction. In one embodiment, a video view that needs to be monitored for safety may be more critical than a video view that needs to be monitored for movement and/or work. Accordingly, the device 100 may determine the direction corresponding to the video view for safety as the top priority and determine the direction corresponding to the video view for movement and/or work as the secondary priority. Referring to the step S40, a device 100 according to one embodiment determines video priority for at least one of a plurality of video information based on a direction priority. For example, the device 100 may determine the video priority of each video view including multiple video information according to the direction priority. That is, the same priority may be applied to the direction priority and the video priority.

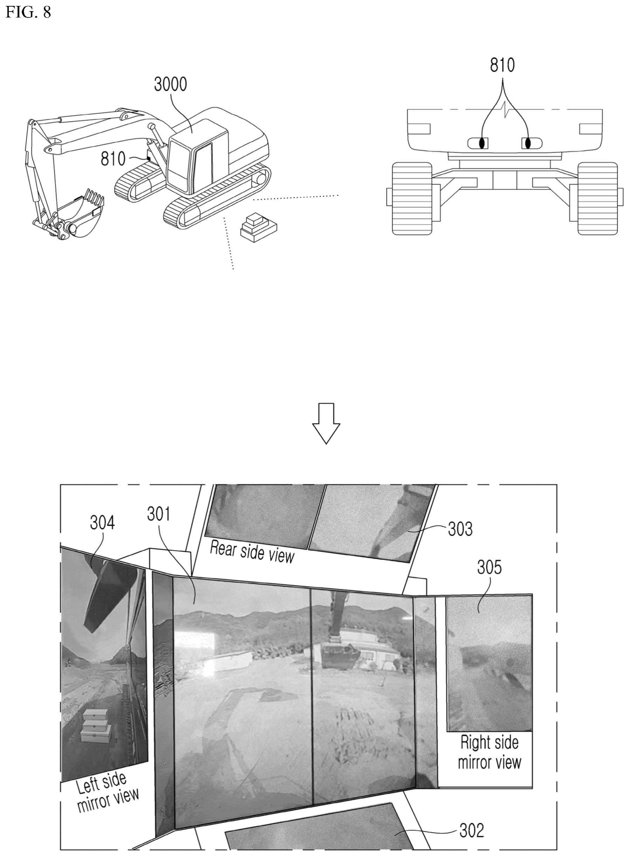

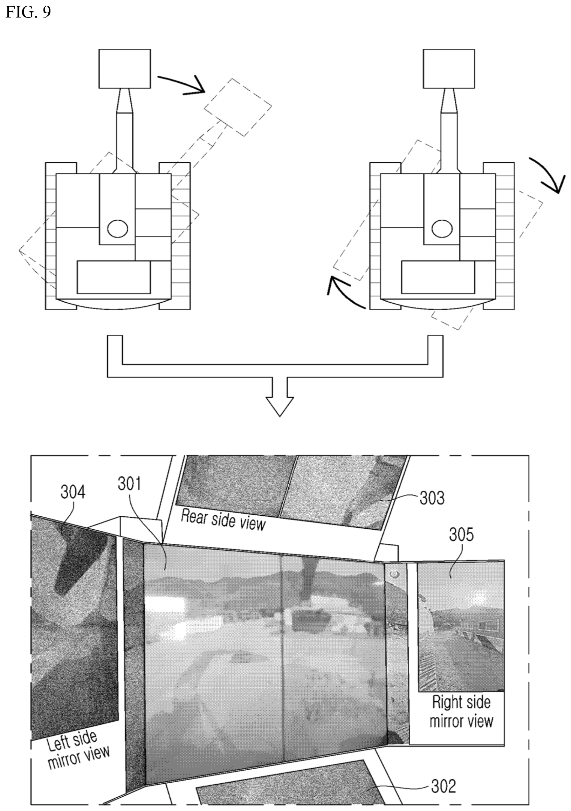

Referring to the step S50, a device 100 according to one embodiment determines a quality level for a plurality of video information based on video priority. In this regard, an explanation will be given with reference to FIGs. 8 and 9.

FIG. 8 is a diagram schematically illustrating an example of a device 100 determining video priority of one or more directions that need to be monitored for safety according to one embodiment.

A device 100 according to one embodiment may determine one or more directions that need to be monitored for safety based on obstacle detection signals obtained from at least one obstacle detection device 810. For example, the exterior of the vehicle 3000 may include at least one detection sensor, and the device 100 may determine a direction that needs to be monitored for safety based on an obstacle detection signal obtained from the detection sensor. In one embodiment, the obstacle detection device 810 is not limited to a detection sensor, and may further include an AI-based obstacle detection system, a radar sensor, or the like. Referring to FIG. 8, the device 100 can detect obstacles around the vehicle 3000 based on an obstacle detection signal obtained through an obstacle detection device 810 of the vehicle 3000. In FIG. 8, the device 100 can determine the left side as a direction that needs to be monitored for safety by detecting an obstacle located on the left side of the vehicle 3000. Accordingly, the device 100 can determine the video priority of the left side view 304 to be the highest. Additionally, the video priority of the front side view 301, which allows identification of the direction in which it is currently moving or working, may be determined to be next priority to the video priority of the left side view 304. When a direction which needs to be monitored for safety is determined, the video priority of the rear side view 303, bottom view 302, and right side view 305 among the multiple video included in the video view, in which no obstacles are detected and which do not include the current movement direction or work direction, may be determined to be relatively low. Therefore, the quality level may be determined based on the order in which video priorities are determined. That is, in FIG. 7, the quality level of the left side view 304 may be determined as Level 1, which is the highest, the quality level of the front side view 301 may be determined as Level 2, which is lower than Level 1, and the quality levels of the rear side view 303, the bottom view 302, and the right side view 305 may be determined as Level 3, which is lower than Level 2. Accordingly, video views with different resolutions may be provided (displayed) depending on the quality level determined based on the video view for safety.

FIG. 9 is a schematic diagram illustrating an example of a device 100 determining one or more video priorities that need to be monitored for movement and/or work according to one embodiment.

A device 100 according to one embodiment, when the direction in which the vehicle 3000 will move or work is determined based on a user input, may determine a high priority for a video in a direction corresponding to the movement direction or work direction. Referring to FIG. 9, when the movement direction or work direction of the vehicle 3000 is determined to be in the right side direction based on user input, the video priority of the right side view 305 may be determined to be the highest. Additionally, the video priority of the front side view 301, which allows identification of the direction in which it is currently moving or working, may be determined to be next priority to the video priority of the right side view 305. When the movement direction or work direction is determined, the video priority of the rear side view 303, bottom view 302, and left side view 304 among the multiple video included in the video view, which do not include the current movement direction or work direction, the direction to be moved or direction to be worked may be determined to be relatively low. That is, in FIG. 8, the quality level of the right side view 305 may be determined as Level 1, which is the highest, the quality level of the front side view 301 may be determined as Level 2, which is lower than Level 1, and the quality levels of the rear side view 303, the bottom view 302, and the left side view 304 may be determined as Level 3, which is lower than Level 2. Accordingly, video views with different resolutions may be provided (displayed) depending on the quality level determined based on the video view for movement and/or work direction.

As another example, the device 100 may determine whether there is overlap between at least one object included in mutual videos based on video information included in the mutual video corresponding to an adjacent direction based on video priority. Mutual videos represent videos located in adjacent directions. For example, the front side view 301 and the bottom view 302, the front side view 301 and the left side view 304, and the front side view 301 and the right side view 306 may be mutual videos. Specifically, a mutual video refers to a video in which the same information may be included in multiple video information obtained from multiple video devices. For example, the front side view 301 and the left side view 304 may include videos recorded in adjacent directions, so that a portion of the same object may be included in duplicate. Depending on the positions of multiple video devices, the recording regions may overlap, resulting in overlapping video information included in the mutual videos. An object represents at least one object that may be identified in the video. In one embodiment, the overlap between at least one object among the video information included in the mutual video indicates whether the same region for the same object is provided (displayed) in the mutual video in an overlapping manner. The device 100 may determine the quality level based on whether there is overlap. When there is an overlapping region between at least one object included in a mutual video, the device 100 may determine the quality level of a video view with a previously determined higher video priority among the mutual videos to be high and may determine the quality level of a video view with a previously determined lower video priority to be lower. In cases where overlapping regions exist, since the same region for the same object is provided in two or more video views in duplicate, it may be inefficient to determine the quality level for all video views provided in duplicate to be high, so it may be desirable to determine the quality level for the video view with the highest video priority among all video views provided in duplicate to be high. Therefore, for all video views provided in duplicate, except for the view with the highest video priority, the quality level may be lowered below the predefined level from the previously determined quality level. For example, if the existing quality level was Level 2, the quality level may be lowered to Level 2.5 or Level 2.7, which are lower than Level 2 but higher than Level 3. Level 2.5 may be higher than Level 2.7, and Level 2.7 may be higher than Level 3. As another example, the device 100 may adjust the extent to which the quality level is lowered below the predefined level from a previously determined quality level based on the area of overlapping overlapping region. For example, if the area of an object in an overlapping region among multiple video views, except for the view with the highest video priority among all video views provided in duplicate, corresponds to more than a first percent (e.g., 50 percent) of the total area of the object, the quality level for the video view may be lowered by one level from the previously determined quality level because the area of the same object in the mutual videos is provided in duplicate by more than a predefined percentage. For example, if the existing quality level was Level 2, it may be lowered to Level 3. Further, if the area of an object in an overlapping area among multiple video views, except for the video view with the highest video priority among all video views provided in duplicate, corresponds to less than 1 percent (e.g., 50 percent) of the total area of the object, the quality level for the video view may be lowered to less than half a level below the previously determined quality level. For example, if the existing quality level was Level 2, it may be lowered to Level 2.5 or Level 2.7. Specifically, if the object area of the overlapping region corresponds to less than a second percent (e.g., 25 percent) lower than a first percent of the total object area, the existing quality level of the corresponding video view may be lowered to Level 2.5 if it was Level 2. Additionally, if the object area of the overlapping region is more than or equal to a second percent and less than a first percent of the total object area, the existing quality level of the corresponding video view may be lowered to Level 2.7 if it was Level 2. Therefore, the quality level may be adjusted by differently judging the importance of each video view depending on the ratio of the object area of the overlapping region to the total object area.

In another embodiment, the device 100 may determine a quality level for each video view in which a plurality of video information is provided based on weights assigned such that they gradually decrease in the order of direction which needs to be monitored for safety, movement direction, and operation direction. For example, a video view corresponding to a direction which needs to be monitored for safety may be a safety-related video view that may be directly related to human life, so that such video view may be determined to have the highest quality level. In addition, the movement direction control input corresponding to the movement direction may be given a second-highest weight in that the movement direction may include the probability of a dangerous situation occurring at various locations because the location of the vehicle 3000 is changed to another location depending on the input signal. Further, the operational direction control input corresponding to the operation direction may be given a third-highest weight in that the operational direction of the vehicle may be changed according to the input signal, and the location of the vehicle 3000 may be maintained at the same location, so the probability of a dangerous situation occurring may be lower than the probability according to the movement direction. Accordingly, even if the input signals corresponding to the direction which needs to be monitored for safety, the movement direction, and the operation direction respectively are not obtained at the same time, the quality level of the video view corresponding to the direction which needs to be monitored for safety may be determined as Level 1 as the initial setting value, the quality level of the video view corresponding to the movement direction may be determined as Level 1.5, and the quality level of the video view corresponding to the operation direction may be determined as Level 2. Therefore, communication delays that could occur if all views were always provided at the highest quality level may be avoided.

As another example, among cases where an operational input for a steering lever is obtained as an operation direction intention input and an operational input for a steering lever is obtained as an operation direction control input, when a rotation control input is obtained as an operation direction control input after a device control input for controlling two or more devices among a boom, an arm, and a bucket is obtained as an operation direction intention input, the device 100 may determine a quality level for each video view in which a plurality of video information is provided based on weights that are gradually assigned to decrease in the order of a direction which needs to be monitored for safety, an operation direction, and a movement direction. The direction which needs to be monitored for safety may be given the highest weight for the same reasons as described above. In addition, although the probability of a dangerous situation occurring when the location of the vehicle 3000 is changed to another location may be lower than when the work direction is changed at the same location, in the case of changing the work direction after controlling more than half of the devices among the boom, arm, and bucket in an excavator, the probability of colliding with an obstacle (object) outside the vehicle 3000 may be significantly higher depending on the work direction, unlike a general vehicle 3000, so that the operation direction may be given a higher weight than the movement direction. Accordingly, even if the input signals corresponding to the direction which needs to be monitored for safety, the operation direction, and the movement direction respectively are not obtained at the same time, the quality level of the video view corresponding to the direction which needs to be monitored for safety may be determined as Level 1 as the initial setting value, the quality level of the video view corresponding to the operation direction may be determined as Level 1.5, and the quality level of the video view corresponding to the movement direction may be determined as Level 2.

Referring to step S60, a device 100 according to one embodiment provides all or part of a plurality of video information according to a quality level.

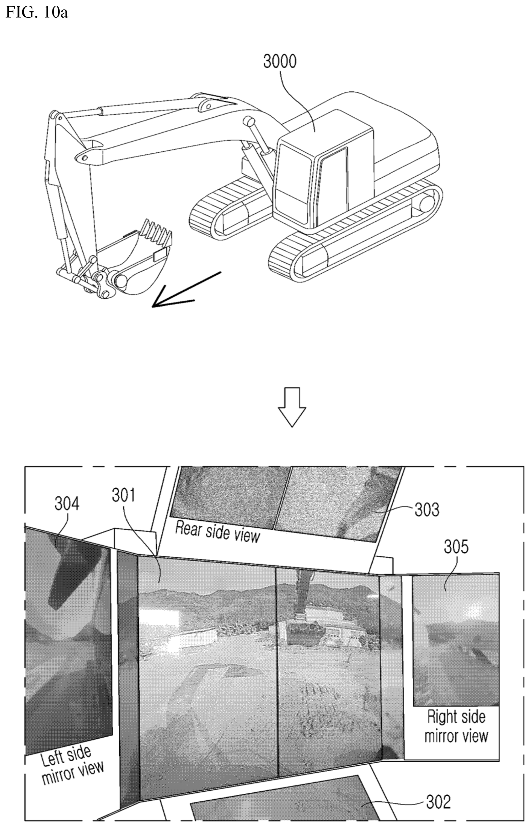

FIG. 10a is a schematic diagram illustrating an example in which a device 100 provides video information with different quality levels applied based on the forward direction of a vehicle 3000 according to one embodiment.

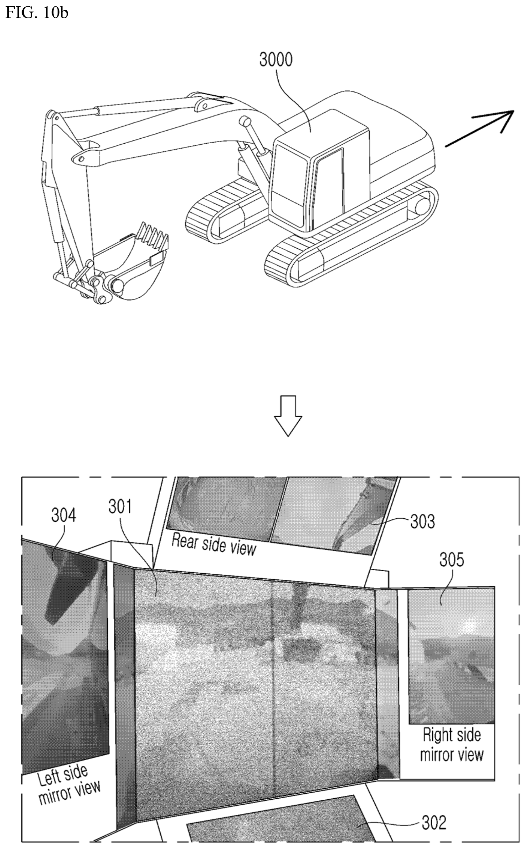

FIG. 10b is a schematic diagram illustrating an example in which a device provides video information with different quality levels applied based on the reverse direction of a vehicle according to one embodiment.

Referring to FIG. 10a, when a vehicle 3000 moves forward, the device 100 may determine the quality levels of the front side view 301 and the bottom view 302 as Level 1, the quality levels of the left side view 304 and the right side view 305 as Level 2, and the quality level of the rear side view 303 as Level 3. That is, when a vehicle 3000 moves forward, the situation of the front side may be important and the ground condition underneath it may be important, so by determining the quality level of the front side view 301 and the bottom view 302 as Level 1, the front side view 301 and the bottom view 302 may be provided as videos with the highest resolution. Additionally, as the vehicle 3000 moves forward, there may be obstacles on both sides, and situations that limit the moving path may be included, so the videos on both sides may need to have a certain level of resolution. Accordingly, the device 100 may provide the left side view 304 and the right side view 305 as videos with a resolution lower than Level 1 by determining the quality level of the left side view 304 and the right side view 305 as Level 2. In addition, since the rear side is likely not to be included in the moving path when the vehicle 3000 moves forward, the quality level of the rear side view 303 may be determined to be Level 3, so that the resolution of the rear side view 303 can be provided as a video lower than Level 2.

Referring to FIG. 10b, when a vehicle 3000 moves backward, the device 100 may determine the quality level of the rear side view 303 as Level 1, the quality levels of the left side view 304 and the right side view 305 as Level 2, and the quality levels of the front side view 301 and the bottom view 302 as Level 3. That is, when the vehicle 3000 moves backward, the situation at the rear side may be important. Additionally, as the vehicle 3000 moves backward, there may be obstacles on both sides, and situations that limit the moving path may be included, so the videos on both sides may need to have a certain level of resolution. Accordingly, the device 100 may provide the left side view 304 and the right side view 305 as videos with a resolution lower than Level 1 by determining the quality level of the left side view 304 and the right side view 305 as Level 2. Additionally, in one example, when a vehicle 3000 moves backward, the quality level of the front side view 301 may be determined as Level 3 because there is a high probability that the front side will not be included in the moving path. Additionally, in one example, the bottom view 302 of an excavator may include the ground facing the boom, arm, and bucket of the excavator. That is, the ground region corresponding to the lower part of the front side of the vehicle 3000 may be included in the bottom view 302. Accordingly, when a vehicle 3000 moves backward, the quality level of the bottom view 302 may be determined as Level 3 because there is a high probability that the bottom view 302 will not be included in the moving path. Accordingly, the resolution of the front side view 301 and the bottom view 302 may be provided as videos lower than Level 2.

In one embodiment, the device 100 may change the region provided in the bottom view 302 based on an input of user's selection. For example, the device 100 may include a ground region corresponding to the lower part of the body of the vehicle 3000 in the bottom view 302 according to an input of user's selection. When the vehicle 3000 moves backward, if the first ground region corresponding to the lower part of the front side is included in the bottom view 302, the quality level of the bottom view 302 may be determined as Level 3, but if the second ground region corresponding to the lower part of the body of the vehicle 3000 is included in the bottom view 302, the quality level of the bottom view 302 may be determined as Level 1 or Level 2 based on the status information of the second ground region because the moving path may be partially included in the bottom view 302 when moving backward. For example, if the ground condition is uneven (if more than a predefined percentage of gravel or rocks are detected), the quality level of the bottom view 302 may be determined as Level 1, and if the ground condition is even (sand, asphalt), the quality level of the bottom view 302 may be determined as Level 2.

As another example, if the device 100 determines that the ground condition of the second ground region corresponding to the lower part of the body of the vehicle 3000 is uneven, it may automatically change the bottom view 302 corresponding to the lower part of the existing front side to the bottom view 302 corresponding to the lower part of the body of the vehicle 3000. Accordingly, the device 100 may determine the quality level of the bottom view 302 as Level 1 regardeless of whether the vehicle 3000 is moving forward or backward.

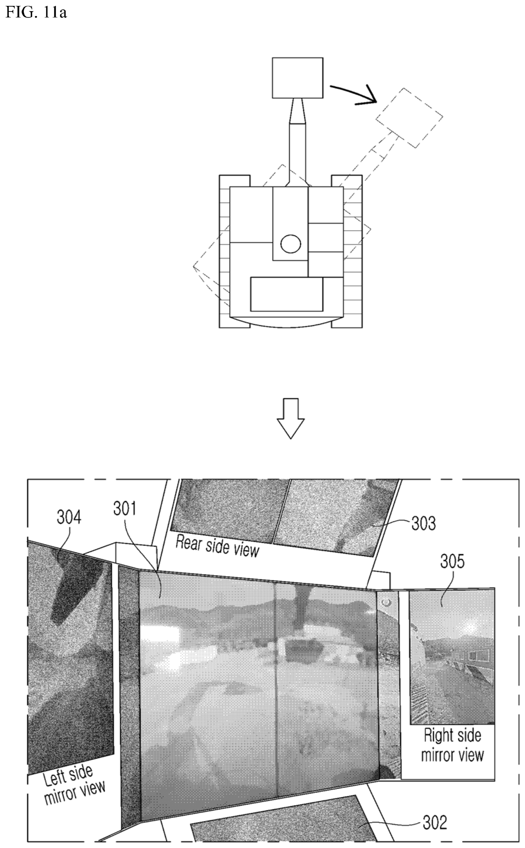

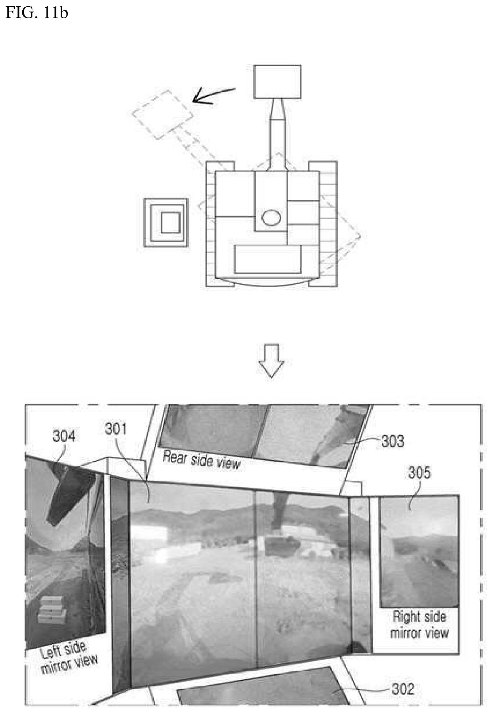

FIGs. 11a and 11b are schematic diagrams illustrating an example in which a device 100 provides video information with quality levels applied based on top priority direction and secondary priority direction according to one embodiment.

A device 100 according to one embodiment may determine a direction which is determined to be monitored for safety as a top priority direction and a direction which is determined to be monitored for movement and/or work as a secondary priority direction. When a direction which is determined to be monitored for safety and a direction which is determined to be monitored for movement and/or work are simultaneously obtained, the device 100 may determine the quality level of the video view corresponding to the top priority direction as Level 1, and may determine the quality level of the video view corresponding to the secondary priority direction as Level 1.5, which is lower than Level 1 and higher than Level 2. In FIG. 11b, the direction that needs to be monitored for safety may be the left side of the vehicle 3000, so the left side view 304 may be the video view corresponding to the highest priority direction. Additionally, in FIG. 11a, the direction that needs to be monitored for movement and/or work may be the right side of the vehicle 3000, so the right side view 305 may be the video view corresponding to the secondary priority direction. In FIG. 11a, it may be seen that the resolution is provided (displayed) at the highest level as the quality level of the right side view 305 corresponding to the direction that needs to be monitored for movement and/or work is determined as Level 1. Additionally, it may be seen that the resolution is applied in the order of quality levels as the quality level of the front side view 301 is determined as Level 2 and the quality level of the left side view 304 is determined as Level 3. In FIG. 11b, when a direction in which an obstacle is detected and monitoring is determined to be necessary for safety and a direction in which monitoring is determined to be necessary for movement and/or work are simultaneously obtained, the quality level of the left side view 304 corresponding to the highest priority direction may be updated. The device 100 may determine the quality level of the left side view 304 corresponding to the highest priority direction as Level 1, and may determine the quality level of the right side view 305 corresponding to the secondary priority direction as Level 1.5. Accordingly, the left side view 304 may be provided at the highest resolution, and the right side view 305 may be provided at a lower resolution than the left side view 304. In addition, since the current moving direction and current working direction of the vehicle 3000 may be confirmed through the front side view 301, the quality level of the front side view 301 is determined as Level 2, so that the front side view 301 may be provided at a lower resolution than the video view corresponding to the top priority direction and secondary priority direction. By determining the quality level of the video views other than the front side view 301 and the video views corresponding to the top priority direction and the secondary priority direction as Level 3, the video views identified to include unimportant region may be provided at the lowest resolution. Therefore, among the multiple video information obtained from multiple video devices, the multiple video views with different qualities are provided by distinguishing between video views in which information (data) must be displayed in detail and video views in which information (data) may be displayed briefly, so that when all video views are provided with the same quality, the time delay/waiting time that may occur due to limited bandwidth may be reduced, so that the user can receive important video views with high quality with minimal time delay/waiting time.

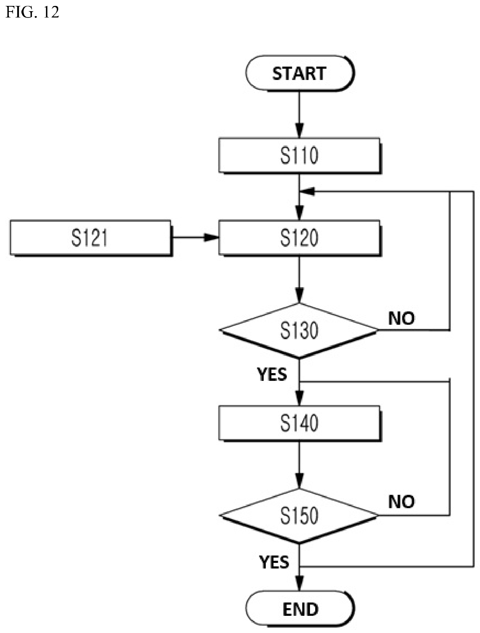

FIG. 12 is a schematic diagram illustrating a flow chart for providing video information according to one embodiment.

Referring to FIG. 12, in step S110, the device 100 according to one embodiment provides an initial setting view (default view). In step S121, when a control command is input based on user input, in step S120, the device 100 provides a predefined view corresponding to the control command. In step S130, the device 100 checks whether there is a direction that needs to be monitored for safety (Safety issue detect?). If no safety issue is detected, the device 100 continues to provide a predefined view, and if a safety issue is detected, the device 100 may provide a safety view overlay at step S140. For example, the device 100 may determine and provide the highest resolution of the view corresponding to the safety view and provide a warning message indicating the location of the video view corresponding to the safety view in the main view. The main view may be a region including a front side view 301 or a bottom view 302. The device 100 may determine the highest resolution of the video view corresponding to the safety view, update the main view to the view corresponding to the safety view, and provide the safety view preferentially through the main view along with a warning message indicating the location of the safety view. In step S150, the device 100 checks whether the safety issue is resolved. The device 100 continues to provide a safety view if the safety issue is not resolved, and returns to step S120 and provides a predefined view if the safety issue is resolved. For example, it may be provided by downgrading the resolution back to the original resolution. The device 100 may repeatedly perform a process for providing video information corresponding to the flow chart illustrated in FIG. 12 based on a plurality of signals obtained inside or outside the vehicle 3000.

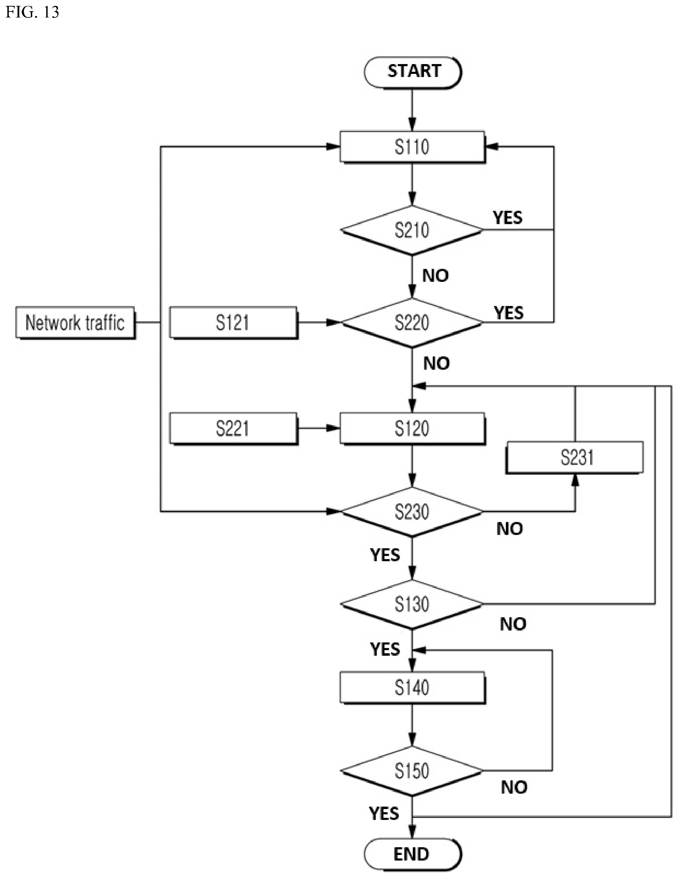

FIG. 13 is a diagram illustrating a more detailed flow chart for providing video information according to one embodiment.

Referring to FIG. 13, in step S110, the device 100 provides an initial setting view defined at initial startup by controlling devices and controllers capable of remote control based on network traffic. In step S210, when an Auto Idle command indicating that there is no control command for a specific period of time is input, the device 100 according to one embodiment returns to step S110 and continues to provide the initial setting view. In addition, while FIG. 12 illustrates an example where step S120 is performed when step S121 is input, a more detailed explanation follows: if no automatic idle command is input in step S210 and a control command is input based on user input in step S121, it may be determined in step S220 whether the control command is included in a predefined dead zone. A dead zone may represent a region to identify invalid control commands corresponding to micro-movements that are not determined as valid control commands. For example, if every single movement is determined to be a valid control command, many examples of malfunctions may be included. Accordingly, the initial setting view is continuously provided by checking whether the input control command is included in the dead zone, and if it is included in the dead zone, determining it as an invalid control command and returning to step S110. If the input control command is determined to be a valid control command and is not included in the dead zone, the device 100 provides a predefined view corresponding to the control command in step S120. For example, in step S221, when a movement direction intention input for a turn signal, a driver's view point, or the like is obtained based on a user input, the device 100 provides a predefined view corresponding to the movement direction intention input. In one embodiment, even if the video views according to the control command and the movement direction intention input are different, the device 100 converts the quality levels of the video views for both. Therefore, the user may be provided with video views with higher quality level for both. In addition, since the device 100 improves the quality level of the corresponding video view according to the movement direction intention input when no control command is input and only a movement direction intention input is obtained, the user may be provided with a video view of a high quality level before a control command is input. The device 10 may provide a predefined view corresponding to a control command or movement direction intention input, and compare and analyze network traffic between the predefined view and the initial setting view to determine whether the video view may be provided within a limited bandwidth corresponding to the maximum amount of data transmission that the network can handle. If it is determined that the configured video views exceed the network traffic and video views cannot be provided within the limited bandwidth, the quality level of the lower priority video views is adjusted to be lowered, and if it still exceed the network traffic after the adjustment, the video views are sequentially turned OFF in the order of the lower priority video views to satisfy the network traffic. If it is determined that the configured video views satisfy the network traffic and video views can be provided within the limited bandwidth, steps S130 to S150 may be sequentially performed as described in FIG. 12.

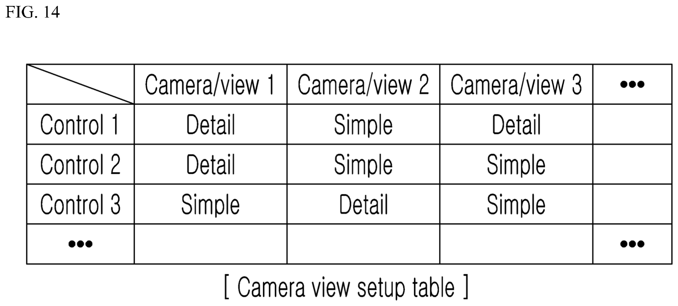

FIG. 14 is a diagram schematically illustrating an example in which, in one embodiment, the quality level for each of a plurality of video devices is determined differently according to a plurality of situations, through a setup table.

Referring to FIG. 14, multiple pieces of video information (view 1, view 2, view 3, or the like) may be expressed simply or in detail according to different control commands depending on multiple situations. For example, when a command for control 1 is input based on user input, the device 100 can determine the quality level of view 1 and view 3 to be high so that data expressed in detail in view 1 and view 3 may be provided, and can determine the quality level of view 2 to be low so that data expressed simply in view 2 may be provided. Additionally, when a command for control 2 is input based on user input, the device 100 can determine the quality level of view 1 to be high so that data expressed in detail in view 1 may be provided, and can determine the quality level of view 2 and view 3 to be low so that data expressed simply in view 2 and view 3 may be provided. In this way, the quality level of each of the multiple video views may be determined differently to correspond to each of various multiple situations, and the video views may be provided in different ways or with different resolutions for each quality level depending on the determined quality level.

According to one embodiment, there is an effect that the efficiency of video provision may be improved in that multiple pieces of video information may be provided with different qualities depending on the surrounding circumstances of the vehicle 3000 and the driving state of the vehicle 3000, and an effect that the satisfaction may be improved in that the user can check important video information more clearly thereby helping to reduce the risk of accidents. Additionally, the accuracy of video information provision may be improved because different video priorities may be applied according to various situations.

Various embodiments of the present disclosure may be implemented as software including one or more instructions saved in a storage medium (e.g., a memory) readable by a machine (e.g., a display apparatus or a computer). For example, a processor of the machine (e.g., processor 120) may call at least one instruction from one or more instructions saved from a storage medium and execute it. This enables the machine to be operated to perform at least one function in accordance with at least one instruction called above. The one or more instructions may include codes generated by a compiler or codes executable by an interpreter. The machine-readable storage medium may be provided in the form of a non-transitory storage medium. Here, 'non-transitory' simply means that the storage medium is a tangible apparatus and does not contain signals (e.g. electromagnetic waves), and the term does not distinguish between cases where data is saved semi-permanently or temporarily on the storage medium.

According to an embodiment, the methods according to various embodiments disclosed in the present disclosure may be provided as included in a computer program product. The computer program product may be traded between sellers and buyers as a commodity. The computer program product may be distributed in the form of a machine-readable storage medium (e.g., compact disc read only memory (CD-ROM)), or may be distributed online (e.g., by download or upload) via an application store (e.g., Play Store^{™}) or directly between two user devices (e.g., smartphones). In the case of online distribution, at least a portion of the computer program product may be temporarily saved or temporarily created in a machine-readable storage medium, such as the memory of a manufacturer's server, an application store's server, or an intermediary server.

A person skilled in the art related to the present embodiment will understand that the above-described description may be implemented in a modified form without departing from the essential characteristics thereof. Therefore, the disclosed methods should be considered from an explanatory rather than a restrictive perspective. The scope of the present invention is indicated by the claims, not the foregoing description, and all differences within the scope equivalent thereto should be construed as being included in the present invention.

### DESCRIPTION OF THE NUMERAL REFERENCES

| | | | |
|---|---|---|---|
| 100: | Device | | |
| 110: | Receiving unit | 120: | Processor |
| 301: | Front side view | 302: | Bottom view |
| 303: | Rear side view | 304: | Left side view |
| 305: | Right side view | | |
| 3000: | Vehicle | | |
| 411: | Left steering lever | 412: | Right steering lever |
| 421: | Driving lever | 422: | Driving pedal |
| 423: | Brake pedal | | |
| 430: | Ignition switch | 440: | Steering wheel |
| 450: | Multi-function lever | | |

## Claims

1. A method for providing video information by a device, comprising:
a receiving unit obtaining a plurality of video information corresponding to a plurality of directions and provided from a plurality of video devices;
the receiving unit obtaining a user input for controlling a vehicle;
a processor determining a direction priority for at least one of the plurality of directions based on the user input;
the processor determining a video priority for at least one of the plurality of video information based on the direction priority;
the processor determining a quality level for the plurality of video information based on the video priority; and
the processor providing all or part of the plurality of video information according to the quality level.

2. The method of claim 1,
wherein the determining the direction priority comprises
the processor determining one or more directions among the plurality of directions that need to be monitored for safety as the top priority direction;
the processor determining one or more directions among the plurality of directions that need to be monitored for movement and/or work as the secondary priority direction; and
the processor determining the direction priority based on the top priority direction and the secondary priority direction.

3. The method of claim 1,
wherein the user input comprises
at least one of a movement direction control input for controlling a movement direction of the vehicle, a work direction control input for controlling a work direction of the vehicle, a movement direction intention input for indicating a user's intention to control the movement direction, and a work direction intention input for indicating a user's intention to control the work direction.

4. The method of claim 3,
wherein the determining the direction priority comprises
the processor determining the direction priority of the movement direction control input to be higher than the direction priority of the movement direction intention input.

5. The method of claim 3,
wherein the determining the direction priority comprises
the processor determining the direction priority of the work direction control input to be higher than the direction priority of the work direction intention input.

6. The method of claim 3,
wherein the movement direction intention input includes an operational input for at least one of an ignition switch, a turn signal, and a gear,
wherein the movement direction control input includes an operational input for at least one of a driving lever, a steering lever, a steering wheel, and a pedal,
wherein the location of the vehicle is changed to another location based on the timing of the operation at which the movement direction control input is obtained.

7. The method of claim 3,
wherein the work direction intention input includes an operational input for at least one of a steering lever, a turn signal, and a gear,
wherein the work direction control input includes an operational input for at least one of a driving lever, the steering lever, a steering wheel, and a pedal, and
wherein the upper or lower part of the vehicle is rotated based on the timing of the operation at which the work direction control input is obtained.

8. The method of claim 1,
wherein the determining the quality level comprises:
the processor determining whether there is overlap between at least one object included in mutual videos based on video information included in the mutual videos corresponding to an adjacent direction based on the video priority, and
wherein the processor determining the quality level based on whether there is overlap.

9. The method of claim 8,
wherein the determining the quality level based on whether there is overlap comprises
the processor determining a higher quality level for video with the higher video priority among the mutual videos when there is an overlapping region between the at least one object included in the mutual videos.

10. The method of claim 2,
wherein the one or more directions that need to be monitored for safety are determined based on obstacle detection signals obtained from at least one or more obstacle detection devices.

11. A device for providing video information comprising:
a receiving unit which obtains a plurality of video information corresponding to a plurality of directions and provided from a plurality of video devices, and
obtains a user input for controlling a vehicle; and
a processor which determins a direction priority for at least one of the plurality of directions based on the user input,
determins a video priority for at least one of the plurality of video information based on the direction priority,
determins a quality level for the plurality of video information based on the video priority, and
provides all or part of the plurality of video information according to the quality level.

12. The device of claim 11,
wherein the processor
determines one or more directions among the plurality of directions that need to be monitored for safety as the top priority direction,
determines one or more directions among the plurality of directions that need to be monitored for movement and/or work as the secondary priority direction,
determines the direction priority based on the top priority direction and the secondary priority direction.

13. The device of claim 11,
wherein the user input comprises
at least one of a movement direction control input for controlling a movement direction of the vehicle, a work direction control input for controlling a work direction of the vehicle, a movement direction intention input for indicating a user's intention to control the movement direction, and a work direction intention input for indicating a user's intention to control the work direction.

14. The device of claim 13,
wherein the processor
determines the direction priority of the movement direction control input to be higher than the direction priority of the movement direction intention input.

15. A computer-readable recording medium on which a program for executing the methods of any one of claims 1 to 10 on a computer is recorded.
